# EUROPEAN PATENT APPLICATION

(11) **EP 1 650 767 A1**
(43) Date of publication of application: **26.04.2006**
(21) Application number: 03738593.7
(22) Date of filing: 30.06.2003
(51) Int. Cl.: G21C 3/30

(54) **MOX FUEL ASSEMBLY FOR PRESSURIZED WATER REACTOR**

(71) Applicant: Nuclear Fuel Industries, Ltd., Tokyo 108-0073 (JP)
(72) Inventor: HANAYAMA, Yasushi, c/o Nuclear Fuel Ind., Ltd, Sennan-gun, Osaka 590-0481 (JP); KAWAMURA, Mitsuru, .c/o Nuclear Fuel Ind., Ltd, Sennan-gun, Osaka 590-0481 (JP)
(74) Representative: Texier, Christian
(86) International application number: PCT/JP2003/008291
(87) International publication number: WO 2005/004167

(57) **Abstract**

This invention relates to a MOX fuel assembly for PWRs that enables satisfactorily suppressing a power peaking factor without the necessity of reducing the Pu content per fuel assembly. The MOX fuel assembly has a lattice arrangement in which one or more burnable poison contained UO₂ fuel rods and a plurality of MOX fuel rods are disposed in an n-rows by n-columns (n × n) lattice array. The MOX fuel rod consists of at least two kinds of MOX fuel rods including a plurality of first MOX fuel rods and a plurality of second MOX fuel rods. The first MOX fuel rod has a predetermined Pu content and a predetermined Pu weight, and the second MOX fuel rod has substantially the same Pu content as that of the first MOX fuel rod and a different Pu weight from that of the first MOX fuel rod.

## Description

### TECHNICAL FIELD

This invention relates to a fuel assembly for pressurized water reactors (PWRs), and especially relates to a MOX fuel assembly using MOX fuel rods, i.e., mixed oxide fuel rods containing uranium dioxide and plutonium dioxide.

### BACKGROUND ART

Conventionally the MOX fuel assembly that has been put in practical use for PWRs is a so-called three-stage content distribution type MOX fuel assembly made up of three kinds of MOX fuel rods that have different Pu contents (wt% of plutonium), respectively, and are arranged, from a center toward a periphery, to form a three-stage (high-medium-low) content distribution in order to suppress a maximum value of the comparative fuel rod power within the assembly (power peaking factor within the assembly).

In this conventional fuel assembly, the MOX fuel rods of the low Pu content and of the medium Pu content are arranged in the peripheral zone within the fuel assembly, and the MOX fuel rods of the high Pu content are arranged in a zone inside these peripheral zone. Because of this configuration, even when thermal neutrons from adjacent UO₂ fuel assemblies that are adjacent to the MOX fuel assemblies in a nuclear reactor core flow into the MOX fuel rods of the low Pu content and the medium Pu content whose Pu additive rates are comparatively small, balance of the power distribution in a transverse section of the fuel assembly is maintained favorably, and the power peaking factor inside the fuel assembly is satisfactorily controllable. This is made possible partly because powers of the MOX fuel rods arranged in the peripheral zone within the fuel assembly are suppressed due to low and medium levels of their Pu contents and, on the other hand, partly because the MOX fuel rods having a high Pu content whose Pu additive rate is comparatively high in the inner zone within the fuel assembly, i.e., a zone that is hard for thermal neutrons following from the outside to exert an influence on.

However, it was pointed out that this three-stage content distribution type MOX fuel assembly had a drawback of increased manufacturing cost because of the following reasons. That is:
- a special facility is needed which handles three kinds of MOX fuel powders having a different Pu additive rates, respectively, without a possibility of mixing them;
- it is necessary to form the three kinds of powders each having a different Pu content into pellets and confine them in respective fuel rods each of which can be identified individually; and
- when forming MOX fuel pellets each having a different Pu content, it is necessary to clean a manufacturing line (to clean the line so that MOX fuel powders each having a different Pu content, their pellets, or their debris should not mix with one another in the subsequent process).

Although a design in which burnable poison contained UO₂ fuel rods (BP fuel rods) are arranged as a part of the MOX fuel assembly so that kinds of to-be-used MOX fuel rods in terms of Pu content are reduced is also already known. Even this known design uses the MOX fuel rods of two kinds of Pu contents, and does not reach a fundamental solution to the several problems described above.

On the other hand, in order to put in practical use the single content type MOX fuel assembly consisting of only one kind of a MOX fuel rod having a fixed Pu additive rate, there can be devised a configuration in which the Pu additive rate is set lower than the average Pu content of the above-mentioned three-stage content distribution type MOX fuel assembly so that a neutron multiplication factor of the whole fuel assembly becomes lower than that of the UO₂ fuel assembly that is loaded in the reactor core simultaneously. In this case, although the power peaking factor in each fuel assembly cannot be controlled satisfactorily, the power peaking factor as seen from the whole reactor core can be controlled within a limit that satisfies the safety of the reactor core because the neutron multiplication factor as the MOX fuel assembly becomes low.

However, in the reactor core that adopts one kind of the MOX fuel assembly having a low Pu content like this, the number of fuel assemblies to be replaced (new fuel assembly) necessary to secure the same operating period will increase compared with the reactor core consisting of only the UO₂ fuel assemblies, Therefore, this idea still has a problem of increase in the total manufacturing cost for preparing necessary fuel assemblies.

On the other hand, in the plutonium-thermal-use light water reactor that is operated while replacing about one-third of the total fuel assemblies in number that are loaded in the reactor core of PWR using light water as moderator by the MOX fuel assemblies, almost all the MOX fuel assemblies in the reactor core are adjacent to the UO₂ fuel assemblies.

In this case, since the MOX fuel assembly has a large absorption effect of thermal neutrons compared with the UO₂ fuel assembly, an energy spectrum of neutrons within the MOX fuel assembly tends to be hardened. Therefore, within the MOX fuel assembly, the level of a thermal neutron flux becomes lower than that within the UO₂ fuel assembly.

For this reason, a phenomenon of thermal neutrons flowing to the MOX fuel assembly from the UO₂ fuel assembly occurs between the MOX fuel assembly and the UO₂ fuel assembly that are adjacent to each other in the reactor core. As a result, within the MOX fuel assembly that is adjacent to the UO₂ fuel assembly, nuclear fission based on the thermal neutrons flowing from the outside becomes active especially in a peripheral zone and its adjacence, and the powers of the MOX fuel rods arranged in such zones become comparatively high.

That is, the powers of the MOX fuel rods arranged in the peripheral zone and its adjacence within the MOX fuel assembly increases comparatively, compared with powers of the MOX fuel rods arranged in an inner zone inside those zones due to an influence of the thermal neutron flux flowing thereinto from the outside. The maximum power of individual fuel rod within the reactor core must be limited from the viewpoint of safety (integrity of fuel) of the reactor core. In order to satisfy this limitation, it is necessary to control satisfactorily a maximum value (power peaking factor inside fuel assembly) of a relative power of each fuel rod within each fuel assembly.

### DISCLOSURE OF THE INVENTION

Therefore, a problem of this invention is to provide a MOX fuel assembly for PWRs that enables satisfactory control of the power peaking factor within the fuel assembly without the necessity of reducing a Pu content per fuel assembly by designing properly arrangement of individual fuel rods within the MOX fuel assembly.

According to this invention, the above-mentioned problem is solved by a fuel assembly for PWRs that has a lattice arrangement in which one or more burnable poison contained UO₂ fuel rods and a plurality of MOX fuel rods are arranged in an n-rows by n-columns (n × n) lattice array and that is with a particular design described in a characterizing portion of claim 1 of the present invention. That is, the MOX fuel rods arranged within the fuel assembly according to this invention comprise at least two kinds of MOX fuel rods including a plurality of first MOX fuel rods and a plurality of second MOX fuel rods, wherein each of the first MOX fuel rods has a predetermined Pu content and a predetermined Pu weight, and each of the second MOX fuel rods has substantially the same Pu content as that of each of the first MOX fuel rods and a Pu weight different from that of each of the first MOX fuel rods.

According to one embodiment of this invention, each of the first MOX fuel rods has a first cladding tube and a plurality of first MOX fuel pellets confined inside the first cladding tube, each of the second MOX fuel rods has a second cladding tube and a plurality of second MOX fuel pellets confined inside the second cladding tube, and the first MOX fuel pellet and the second MOX fuel pellet are substantially equal to each other in Pu content and in height dimension and different from each other in pellet weight.

According to another preferred embodiment of this invention, the burnable poison contained UO₂ fuel rods are arranged in four-corner locations, or the four-corner locations and their adjacent zone of the lattice arrangement.

According to further another preferred embodiment, the first MOX fuel rod has a lower Pu weight than a Pu weight of the second MOX fuel rod, the first MOX fuel rods are arranged in the peripheral zone, or in the peripheral zone and its adjacent zone within the lattice arrangement, and the second MOX fuel rods are arranged in an inner zone inside the arrangement zones of the first MOX fuel rods within the lattice arrangement.

In this manner, within the MOX fuel assembly according to this invention, the two kinds of the MOX fuel rods that are equal to each other in Pu content but different from each other in Pu weight are arranged in parallel, together with one or more burnable poison contained UO₂ fuel rods, to form an n × n lattice arrangement. Inside the cladding tube of each fuel rod, a plurality of fuel pellets are confined according to a usual method. In the burnable poison contained UO₂ fuel rod, a plurality of UO₂ pellets in which burnable poisons, such as gadolinium, are mixed are confined inside the cladding tube, and in the MOX fuel rod, the MOX fuel pellets containing plutonium dioxide are confined inside the cladding tube. The MOX fuel rods consists of at least the first MOX fuel rods and the second MOX fuel rods, and the first MOX fuel pellets confined in the first MOX fuel rods and the second MOX fuel pellets confined in the second MOX fuel rods are substantially the same to each other in Pu content and different from each other in Pu weight. According to a preferred embodiment of this invention, a Pu weight of the first MOX fuel rod is lower than a Pu weight of the second MOX fuel rod. Note that this invention is not limited to such an assembly that uses only two kinds of MOX fuel rods, but it is needless to say that in addition to the first and second MOX fuel rods, third, fourth, and other individual MOX fuel rods each having the same Pu content as that of the first and second MOX fuel rods and a different Pu weight from that of the first and second MOX fuel rods may be used.

In the MOX fuel assembly according to a preferred embodiment of this invention, the first MOX fuel rod and the second MOX fuel rod each contain the same number of MOX fuel pellets confined in the respective cladding tubes, the both MOX fuel pellets being substantially equal in height dimension and in Pu content. In this case, the first MOX fuel pellet confined in the first MOX fuel rod and the second MOX fuel pellet confined in the second MOX fuel rod are different from each other in Pu weight. The difference in Pu weight between the first MOX fuel pellet and the second MOX fuel pellet may be realized by differentiating weights of the both pellets. When forming these pellets from raw powder of the same Pu content, this condition can be achieved by the following techniques: the diameter and/or the density of one of the two pellets is adjusted comparatively to the other pellet; or one or both of the two pellets are provided with a hole (hollow pellet) and the volume of this hole is adjusted relatively. It is possible to obtain plural kinds of MOX fuel pellets that are different from one another in Pu weight by differentiating the weights of the first MOX fuel pellet and of the second MOX fuel pellet in this way. In this case, management of the fuel materials, such as collection of forming dust in a line, and process management become simple because a fuel material handled in the manufacturing line of the MOX fuel rods is the same material of a single Pu content. Moreover, even when fabricating plural kinds of MOX fuel rods, the manufacture can easily be applied to these MOX fuel rods only by replacing a forming mold used in a pellet formation step by another mold of a different shape, or by adjusting forming pressure. Therefore, this technique can bring an advantage that increase in the manufacturing cost can be controlled to be a negligible amount.

In the MOX fuel assembly according to this invention, it is desirable that the burnable poison contained UO₂ fuel rods are arranged in the peripheral zone within the lattice arrangement of the MOX fuel assembly, especially in four corner locations or in the four corner locations and its adjacent zone. In this case, the first MOX fuel rods and the second MOX fuel rods are arranged in zones other than the zone where the burnable poison contained UO₂ fuel rods are arranged. To be concrete, the MOX fuel rods having a comparatively lower Pu weight among these MOX fuel rods, for example, the first MOX fuel rods, are arranged in a zone where power of the MOX fuel assembly tends to be high due to being adjacent to the UO₂ fuel assembly when the MOX fuel assembly is loaded in a reactor core, namely in the outermost zone and its adjacent zone within the lattice arrangement. The MOX fuel rods having a comparatively higher Pu weight, for example, the second MOX fuel rods are arranged in the remaining inner zone. Note that preferably Pu contents of these MOX fuel rods are selected so that the neutron multiplication factor of the MOX fuel assembly in which these fuel rods are arranged becomes substantially equivalent to the neutron multiplication factor of the UO₂ fuel assembly that is loaded in the reactor core, together with the MOX fuel assembly, through a cycle lifetime of the reactor.

As described above, since the MOX fuel assembly has a large absorption effect of thermal neutrons compared with UO₂ fuel assembly, the level of the thermal neutron flux within the MOX fuel assembly is low compared with that in UO₂ fuel assembly, and thermal neutrons flow into the MOX fuel assembly from the UO₂ fuel assembly that is adjacent thereto in the reactor core.

As this phenomenon exists, in the MOX fuel assembly according to a preferred embodiment of this invention, the thermal neutrons following thereinto from the adjacent UO₂ fuel assembly in the reactor core are absorbed by the burnable poison contained UO₂ fuel rods arranged in the peripheral zone within the lattice arrangement of the MOX fuel assembly, especially in the four corner locations or in the four corner locations and its adjacent zone, whereby an increase in power of the MOX fuel rods arranged in its adjacence is suppressed. Furthermore, since the first MOX fuel rods having a lower Pu weight are arranged in the outermost zone and its adjacent zone within the lattice arrangement of the MOX fuel assembly, i.e., a zone where the level of the thermal neutron flux flowing thereinto from the adjacent UO₂ fuel assembly is high, nuclear fission of Pu by the thermal neutrons flowing into these zones can be controlled in these zones, and as a result the power peaking factor within the assembly can be suppressed as low as or lower than that of the conventional three-stage content distribution type MOX fuel assembly.

Features and advantages of this invention described above and not described yet will become even clearer from the following description that describes in detail several embodiments to which the inventors do not intend to confine a technical scope of this invention and attached drawings that show schematically these embodiments.

### BRIEF DESCRIPTION OF THE DRAWINGS

The accompanying drawings below show schematically several typical embodiments of this invention only for illustration purpose, in which:
FIG. 1 shows a lattice arrangement of fuel rods within a MOX fuel assembly according to one embodiment of this invention;
FIG. 2 shows a lattice arrangement of fuel rods within a MOX fuel assembly according to another embodiment of this invention;
FIG. 3 shows one example of the lattice arrangement of the fuel rods in the conventional three-stage content distribution type MOX fuel assembly;
FIG. 4A shows schematically a simulated reactor core system for obtaining variations in a power peaking factor to the specific burnup within the MOX fuel assembly (Case 1) that does not include burnable poison rods;
FIG. 4B shows schematically a simulated reactor core system for obtaining variations in power peaking factor to specific burnup within the MOX fuel assembly (Case 2) that includes the burnable poison rods;
FIG. 5A shows results of obtained variations in power peaking factor to specific burnup for the MOX fuel assembly shown in FIG. 1 and for the conventional MOX fuel assembly of the typical three-stage content distribution type shown in FIG. 3 based on the simulated reactor core system in FIG. 4A;
FIG. 5B shows results of obtained variations in power peaking factor to specific burnup for the MOX fuel assembly shown in FIG. 2 and for the conventional MOX fuel assembly of the typical three-stage content distribution type shown in FIG. 3 based on the simulated reactor core system in FIG. 4B;
FIG. 6 shows variations in neutron multiplication factor (k∞) of the fuel assembly according to this invention as a function of Pu content, in comparison with that of the conventional MOX fuel assembly, in the case where the Pu content of the MOX fuel assembly is set so that the neutron multiplication factor (k∞) thereof throughout the combustion cycle lifetime becomes equal to that of the UO₂ fuel assembly (average enrichment of ²³⁵U = 4.1 wt%) that is loaded in the reactor core simultaneously.

### DETAILED DESCRIPTION OF THE PREFERRED EMBODIMENTS

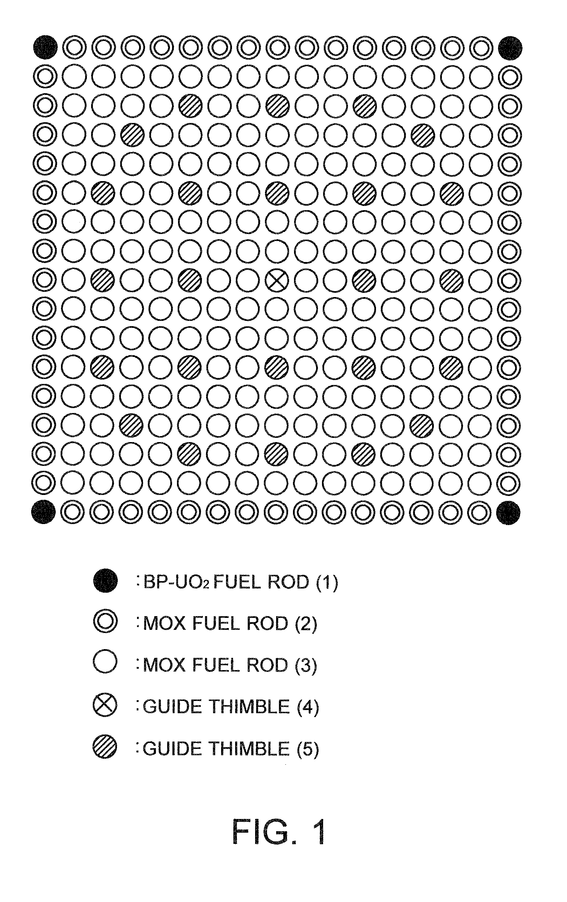

FIG. 1 shows schematically a lattice arrangement (17 × 17) of the fuel rods within the MOX fuel assembly according to a first embodiment of this invention. As shown in the figure, the MOX fuel assembly according to this embodiment is for PWRs, and has four (4) BP fuel rods 1, sixty (60) first MOX fuel rods 2, two-hundred (200) second MOX fuel rods 3, one (1) first guide thimble 4 for guiding incore instrumentation that is disposed in the center of the lattice arrangement, and twenty-four (24) second guide thimbles 5 for guiding control rods that are disposed within the lattice arrangement in an almost evenly distributed configuration. Each BP fuel rod 1 is prepared by charging into a cladding tube a plurality of BP pellets each formed by mixing of gadolinium (Gd₂O₃), as a burnable poison, into uranium dioxide (UO₂). The BP fuel rods 1 are arranged in four corner locations of the lattice arrangement. Each first MOX fuel rod 1 is prepared by charging into a cladding tube a plurality of first MOX fuel pellets having a diameter smaller than that of the BP fuel pellets. The first MOX fuel rods are arranged in the peripheral zone within the lattice arrangement except for the four corners thereof. Each second MOX fuel rod 3 is prepared by charging into a cladding tube a plurality of second MOX fuel pellets having a diameter equal to that of the BP fuel pellets. The second MOX control rods along with the guide thimble 4 for instrumentation and the guide thimbles 5 for guiding control rods are arranged in an inner zone inside the peripheral zone.

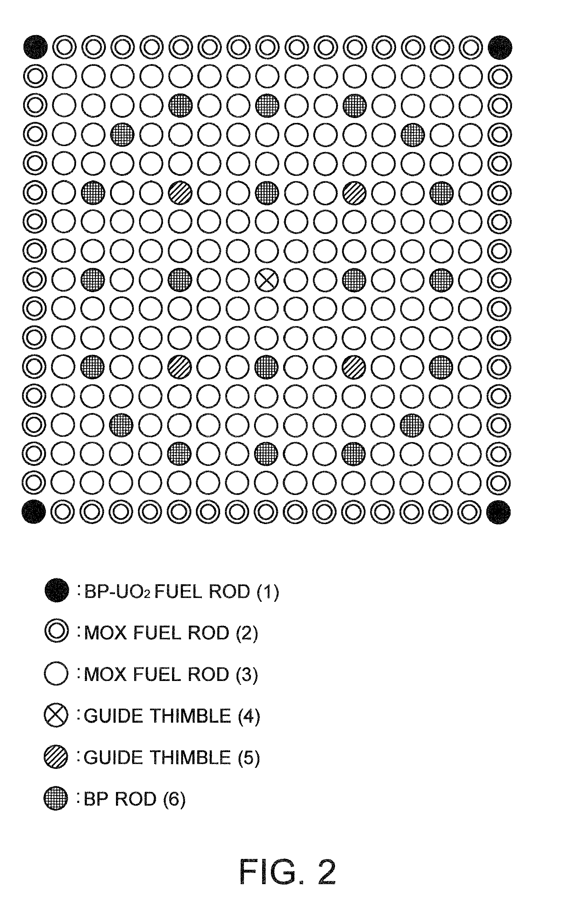

FIG. 2 shows a lattice arrangement of the fuel rods within the MOX fuel assembly according to another embodiment of this invention. The MOX fuel assembly according to this embodiment differs from that of the first embodiment only in that four of the thimble for guiding control rods within the 17 × 17 lattice arrangement are replaced with burnable poison rods (BP rods) 6 that do not contain fuel materials, such as uranium dioxide, and consist of neutron absorbing nuclear species, such as boron, other respects being not substantially different from a configuration shown in FIG. 1. Because of this minor difference, constituents in FIG. 2 corresponding to counter parts in FIG. 1 are designated by the same numerals.

Major design specifications of the fuel rods used in the first embodiment and in the second embodiment are as follows:
- BP fuel rod 1
   - Pellet diameter: : 8.19 mm
   - Cladding tube outer diameter:: 9.50 mm
   - Cladding tube thickness: : 0.57 mm
   - Enrichment of ²³⁵U: : 2.6 wt%
   - Gd₂O₃ content: : 6.0 wt%
- First MOX fuel rod 2
   - Pellet diameter: : 7.49 mm (first MOX fuel pellet)
   - Cladding tube outer diameter :: 9.50 mm
   - Cladding tube thickness: : 0.92 mm
   - Pu content: : 9.72 wt% Pu-total
- Second MOX fuel rod 3
   - Pellet diameter: : 8.19 mm (second MOX fuel pellet)
   - Cladding tube outer diameter:: 9.50 mm
   - Cladding tube thickness: : 0.57 mm
   - Pu content: : 9.72 wt% Pu-total

The composition of the MOX fuel powder used commonly for the first MOX fuel pellets of the first MOX fuel rod 2 and for the second MOX fuel pellets of the second MOX fuel rod 3 is as follows:
- Uranium composition
   - ²³⁵U :: 0.2 wt%
   - ²³⁸U :: 99.8 wt%
- Plutonium composition:
   - ²³⁸PU :: 1.9 Wt%
   - ²³⁹PU :: 57.5 wt%
   - ²⁴⁰PU :: 23.3 wt%
   - ²⁴¹PU :: 10.0 wt%
   - ²⁴²PU :: 5.4 wt%
   - ²⁴¹Am:: 1.9 wt%

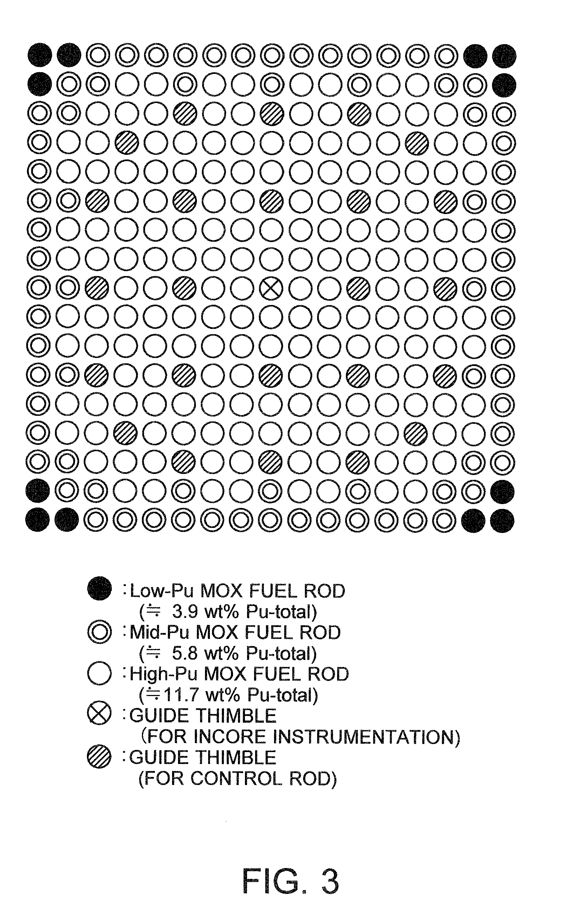

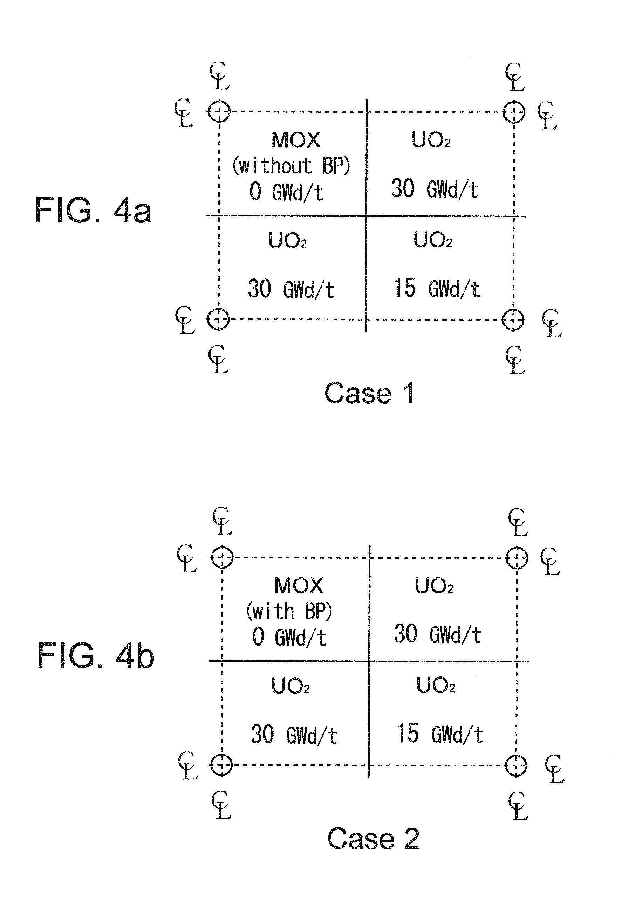

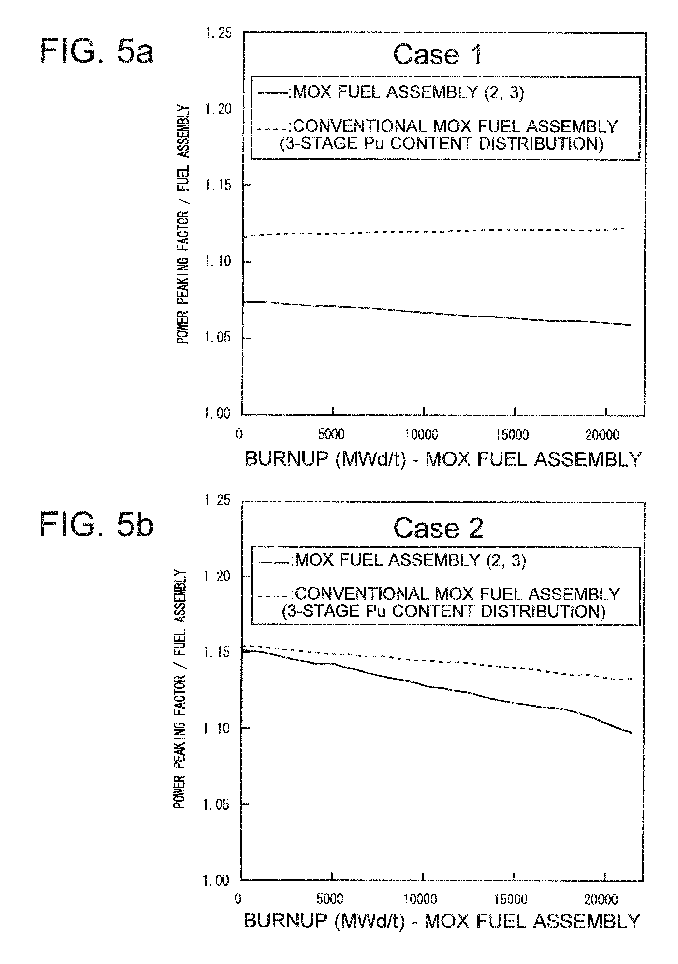

FIG. 3 shows one example of the lattice arrangement of the fuel rod in the conventional typical three-stage content distribution type MOX fuel assembly. FIGS. 4A and 4B show simulation calculation systems for finding variations in power peaking factor for specific burnup, in the case of a MOX fuel assembly without BP (Case 1) rods according to the first embodiment and in the case of a MOX fuel assembly with BP rods according to the second embodiment (Case 2), respectively. FIGS. 5A and 5B show results of variations in power peaking factor to specific burnup obtained according to this calculation system for the MOX fuel assembly (case 1) according to the first embodiment shown in the FIG. 1 and for the MOX fuel assembly (case 2) according to the second embodiment shown in the FIG. 2, respectively, by way of comparison with variations in power peaking factor in the conventional MOX fuel assembly shown in FIG. 3 that was obtained in the same manner.

As shown in FIGS. 5A and 5B, the power peaking factor in the MOX fuel assemblies according to the first embodiment and to the second embodiment, respectively, that were calculated by a typical calculation system for stimulating the PWR reactor core (solid line curves in FIGS. 5A and 5B) are equal to or less than those of specific burnup for cases of the conventional three-stage content distribution type MOX fuel assemblies shown in FIG. 3.

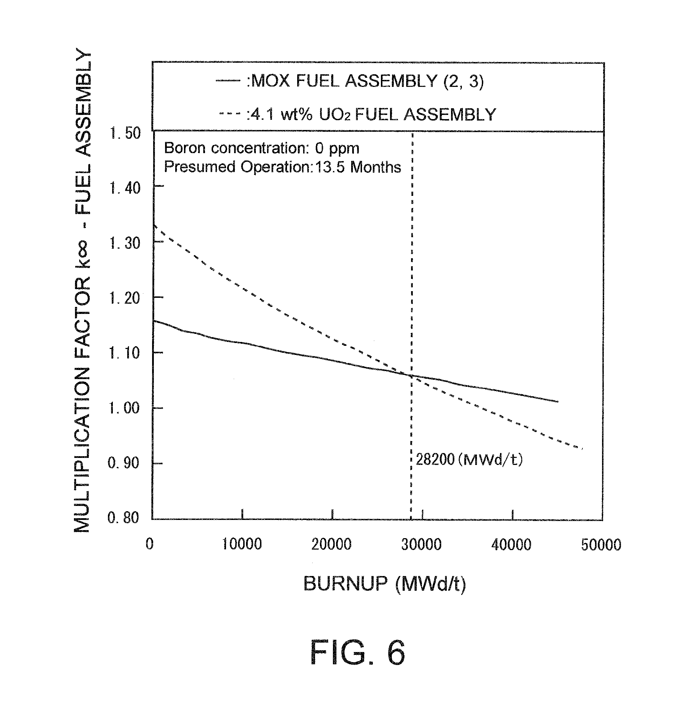

Note that in the first and second embodiments, a Pu content of the MOX fuel powder used commonly for the first and second fuel rods of the respective MOX fuel assemblies was set to 9.72 wt% Pu-total. This was a result of selection such that, for example, assuming a case where a 900 thousand kWe class three-loop PWR plant whose operating cycle consists of about 13 months is operated, and setting a specific core burnup at the end of cycle (EOC) in that case to about 28,200 MWd/t, as a target value, the neutron multiplication factors of the respective MOX fuel assemblies become almost equivalent to that of the UO₂ fuel assembly (²³⁵U enrichment: 4.1 wt%). FIG. 6 shows variations in neutron multiplication factor (k∞) to specific burnup (MWd/t) in this case. In FIG. 6, solid line curves represents variations in neutron multiplication factor of the MOX fuel assembly, and dashed line curves represents variations in neutron multiplication factor of the UO₂ fuel assembly, respectively. By this design, when the MOX fuel assembly according to this invention is loaded in the reactor core, increase in the number of new fuel assemblies can be avoided.

Although the cladding tube of the first MOX fuel rod 2 in which the first MOX fuel pellets having diameters smaller than those of gadolinium mixed UO₂ pellets for the BP fuel rod 1 are confined is thicker than other cladding tubes of the fuel rods 1 and 3, it is desirable to design that all the cladding tubes have the same outer diameter because it does not cause inconveniences from the viewpoint of thermal hydraulics. However, it is also possible to set the diameter of the cladding tube of the first MOX fuel rod 2 smaller than those of the other fuel rods 1 and 3.

Regarding a method of reducing a Pu weight of the first MOX fuel rod to be lower than that of the second MOX fuel rod, it is possible to adopt various methods, such as decreasing the density of the MOX fuel pellet and forming the MOX fuel pellet into a hollow pellet or porous pellet by providing one or more holes, for example, on the central axis thereof or its adjacence in addition to making the diameter of the MOX fuel pellet smaller.

Moreover, each of the MOX fuel assemblies according to the first and second embodiments has substantially the same amount of Pu loading per fuel assembly as that of the conventional three-stage content distribution type MOX fuel assembly, as will be described below.

| | |
|---|---|
| Conventional three-stage content distribution type MOX fuel assembly (Pu content: about 9.7 wt% Pu-total) | : about 45 kg |
| MOX fuel assembly according to the first or second embodiment | : about 41 kg |

As described in the foregoing, the use of the single Pu content MOX fuel assembly according to this invention eliminates the need of cleaning the MOX fuel manufacturing line that has hitherto been considered necessary (operation of removing MOX fuel powder and its pellets so that in the subsequent process, these substances do not mix with other substances having different Pu contents) each time the Pu content of the MOX fuel powder as a raw material is changed, thereby making it possible to reduce the manufacturing cost considerably. And yet the safety and profitability thereof when being used in a nuclear reactor are the same as those of the conventional three-stage content distribution type MOX fuel.

## Claims

1. A MOX fuel assembly for pressurized nuclear reactors wherein the assembly has a lattice arrangement in which one or more burnable poison contained UO₂ fuel rods and a plurality of MOX fuel rods are arranged in an n-rows by n-columns (n × n) lattice array , wherein said MOX fuel rods comprise at least two kinds of MOX fuel rods including a plurality of first MOX fuel rods and a plurality of second MOX fuel rods, and wherein each of the first MOX fuel rods has a predetermined Pu content and a predetermined Pu weight, and each of the second MOX fuel rods has substantially the same Pu content as that of each of the first MOX fuel rods and a Pu weight different from that of each of the first MOX fuel rods.

2. The MOX fuel assembly according to claim 1, wherein each of the first MOX fuel rods includes a first cladding tube and a plurality of first MOX fuel pellets that are confined inside the first cladding tube, each of the second MOX fuel rods includes a second cladding tube and a plurality of second MOX fuel pellets that are confined inside the second cladding tube, and the first MOX fuel pellet and the second MOX fuel pellet are substantially the same to each other in Pu content and in height dimension, but different from each other in pellet weight.

3. The MOX fuel assembly according to claim 1, wherein the burnable poison contained UO₂ fuel rods are arranged in four corner locations of the lattice arrangement or in the four corner locations and its adjacent zones of the lattice arrangement.

4. The MOX fuel assembly according to claim 1, wherein each of the first MOX fuel rods has a lower Pu weight than that of each of the second MOX fuel rods, the first MOX fuel rods are arranged in the peripheral zone or in said peripheral zone and its adjacent zone in the lattice arrangement, and the second MOX fuel rods are arranged in an inner zone inside the arrangement zone of the first MOX fuel rods within the lattice arrangement.

5. The MOX fuel assembly according to claim 4, wherein each of the first MOX fuel rods has a first cladding tube and a plurality of first MOX fuel pellets that are confined inside the first cladding tube, each of the second MOX fuel rods has a second cladding tube and a plurality of second MOX fuel pellets that are confined inside the second cladding tube, and the first MOX fuel pellet and the second MOX fuel pellet are equal to each other in height dimension and in Pu content and are different from each other in pellet weight.

6. The MOX fuel assembly according to claim 5, wherein the first MOX fuel pellet and the second MOX fuel pellet are different from each other in pellet diameter and/or pellet density.

7. The MOX fuel assembly according to claim 5, wherein the first MOX fuel pellets and/or second MOX fuel pellets have one or more holes therein.

8. The MOX fuel assembly according to claim 5 having a lattice arrangement of 17-row by 17-column (n = 17) lattice array, wherein said assembly comprises four burnable poison contained UO₂ fuel rods arranged in four-corner locations of the lattice arrangement, respectively, sixty (60) first MOX fuel rods arranged in four peripheral zones in the lattice arrangement except for the four corners thereof, respectively, two-hundred (200) second MOX fuel rods arranged in an inner zone of the lattice arrangement except for the four corner locations and the peripheral zones, one (1) first guide thimble for guiding incore instrumentation disposed in a center location of the lattice arrangement, and twenty-four (24) second guide thimbles for guiding control rods disposed in the inner zone of the lattice arrangement in an almost evenly distributed configuration.

9. The MOX fuel assembly according to claim 8, wherein four of the second guide thimbles are replaced with burnable poison rods each of which is composed of neutron absorption nuclear species without including nuclear fuel materials.
